# EUROPEAN PATENT SPECIFICATION

(11) **EP 3 141 909 B1**
(45) Date of publication and mention of the grant of the patent: **10.11.2021**
(21) Application number: 15184242.4
(22) Date of filing: 08.09.2015
(51) Int. Cl.: G01N 35/00, G01N 35/10

(54) **LABORATORY ANALYZER FOR MANUALLY HANDLING A PLURALITY OF REAGENTS AND METHOD FOR OPERATING A LABORATORY ANALYZER FOR MANUALLY HANDLING A PLURALITY OF REAGENTS**
LABORANALYSATOR ZUR MANUELLEN HANDHABUNG EINER VIELZAHL VON REAGENZIEN UND VERFAHREN ZUM BETRIEB EINES LABORANALYSATORS ZUR MANUELLEN HANDHABUNG EINER VIELZAHL VON REAGENZIEN
ANALYSEUR DE LABORATOIRE PERMETTANT DE MANIPULER UNE PLURALITÉ DE RÉACTIFS ET PROCÉDÉ DE FONCTIONNEMENT D'UN ANALYSEUR DE LABORATOIRE PERMETTANT DE MANIPULER UNE PLURALITÉ DE RÉACTIFS

(43) Date of publication of application: 15.03.2017
(73) Proprietor: Roche Diagnostics GmbH, 68305 Mannheim (DE); F. Hoffmann-La Roche AG, 4070 Basel (CH)
(72) Inventor: Meyberg, Michael, 6343 Rotkreuz (CH)
(74) Representative: Altmann Stößel Dick Patentanwälte PartG mbB

(56) References cited:
- WO-A1-2007/121324
- WO-A1-2011/032228
- US-A1- 2007 177 778
- US-A1- 2009 049 933
- US-A1- 2013 288 873
- MARKIN S R: "Laboratory automation systems. An introduction to concepts and terminology", AMERICAN JOURNAL OF CLINICAL PATHOLOGY, AMERICAN SOCIETY FOR CLINICAL PATHOLOGY, US, vol. 98, no. 4 Suppl 1, 1 October 1992 (1992-10-01), pages S3-10, XP008082058, ISSN: 0002-9173

## Description

### Field of the invention

The present invention relates to a laboratory analyzer for handling reagents. Such a laboratory analyzer includes a pipette and a computing device. The present invention further relates to a method for operating a laboratory analyzer for handling reagents.

### Related art

The pipette is connected to the computing device. A user of the laboratory analyzer is guided through a manual pipetting workflow by a display of the computing device. As the manual pipette is electronically connected to the computing device, the pipette can be controlled by the computing device. Thus, a basic control of some pipetting parameters is provided by the computing device such as volume selection, dispense and aspirate functions.

WO 2011/032228 A1 describes an instrumented pipette for use in performing an experimental procedure with a fluid sample.

The computing device allows a control of the electronic pipette such as a data exchange with the electronic pipette, a display of workflow and functions, an automated generation of reports, and an electronic connection via USB, wireless connection. Further, the computing device allows a vision control for and display of measurement of dispensed volume, droplets, a position of pipette tip, microscope consumables identification and spatial localization, and tip and tip volume control.

However, there may be multiple places from which the user can aspirate reagents from and multiple other places where the reagent can be dispensed into different vessels. Moreover the reagent type may be coded by different colors and it has to be placed at a correct position prior to pipetting. The same is true for a cuvette, which, in addition to that, may have to be connected to the electronic of the computing device for measurement. Positions for cuvettes and reagents as well as the pipetting order can be mixed up by accident leading to false results of the analysis.

WO2007/121324 A1 discloses a liquid handling system comprising a data processing apparatus, a display, a dispensing tool, and a camera to take photographs of wells in a microplate. It further discloses that a camera may be used to record experimental progress at various stages of an experiment and that photographs or digital movie files may be associated with particular protocols.

### Summary of the invention

According to the present invention, disclosed herein is a laboratory analyzer according to claim 1 for handling reagents and a method according to claim 8 for operating a laboratory analyzer for handling reagents adapted to provide an improved user's guidance through the manual pipetting workflow without the risk of a deviation from the target pipetting workflow.

Embodiments of the disclosed laboratory analyzer for handling reagents and method for operating a laboratory analyzer for handling reagents have the features of the independent claims. Preferred embodiments of the invention, which may be realized in an isolated way or in any arbitrary combination, are disclosed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to the present invention, a laboratory analyzer for handling reagents is disclosed. A laboratory analyzer in the sense of the present invention is a device adapted to analyze samples, wherein the samples to be analyzed are prepared for the analysis using at least one reagent. Particularly, the laboratory analyzer is used for electrochemical and/or spectroscopic experiments.

The laboratory analyzer comprises a computing device comprising a display for displaying a workflow of a pipetting process comprising a plurality of method steps to an operator. A workflow in the sense of the present invention is a predetermined pattern of instructions to be carried out by the operator of the laboratory analyzer. The workflow is illustrated as a sequence of operations or method steps in a graphical manner such as by means of pictures and/or by means of a readable text. A pipetting process in the sense of the present invention is a process carried out using a pipette. The pipetting process includes a transport a measured volume of a liquid.

As such, the laboratory analyzer comprises a pipette for pipetting reagents connected to the computing device. A pipette in the sense of the present invention is a laboratory tool commonly used in chemistry, biology and medicine to transport a measured volume of liquid. Pipettes come in several designs for various purposes with differing levels of accuracy and precision, from single piece glass pipettes to more complex adjustable or electronic pipettes. Many pipette types work by creating a partial vacuum above a liquid-holding chamber and selectively releasing this vacuum to draw up and dispense liquid. The pipette is connected to the computing device for allowing an exchange of data correlated to the pipetting process. As such the pipette is an electronic pipette controlled by the computing device. The connection of the pipette to the computing device may be realized by means of a cable such as an USB cable or by means of a wireless connection such as Bluetooth.

The laboratory analyzer further comprises a plurality of compartments for receiving a plurality of reagents vessels including reagents to be pipetted by means of the pipette. A reagent vessel in the sense of the present invention is a vessel suitable to include or store a reagent. A reagent in the sense of the present invention is a substance or compound that is added to a system or sample in order to bring about a chemical or biological reaction, or added to see if a reaction occurs.

The laboratory analyzer further comprises a camera connected to the computing device, wherein the camera is adapted to acquire data from a vision analysis of at least the plurality of compartments during manually carrying out a pipetting process by the operator according to the workflow. A vision analysis in the sense of the present invention is an analysis method using a camera for optical detection of predetermined regions of the laboratory analyzer, wherein the results of the detection are represented by means of data. In other words, the camera is used in order to observe predetermined regions of the laboratory analyzer. Manually carrying out the pipetting process in the sense of the present invention is to be understood in that the operator manually carries out at least on of the plurality of the method steps of the pipetting process. Thus, the workflow includes at least one method step which is not carried out in an automated manner by the laboratory analyzer. For example, a manual step of the method steps is the arrangement of the reagent vessels in the compartments by the operator, aspirating reagent into the pipette while the operator operates the pipette or dispensing the reagent from the pipette while the operator operates the pipette.

The computing device is adapted to compare the data to target data correlated to the plurality of method steps of the workflow. In other words, the computing device is adapted to compare actual data to target data associated with the method steps. For example, the data include information of the position of the pipette and/or a reagent vessel and the target data include information of a target position of the pipette and/or the reagent vessel at a predetermined one of the method steps. In other words, the computing device detects whether the pipette and/or the reagent vessel is located at a correct position at a certain method step or not. Thus, the laboratory analyzer may detect whether the pipetting process is or will be carried out by the operator according to the workflow or not.

Particularly, the camera is adapted to acquire the data from the vision analysis at predetermined method steps according to the workflow. In other words, the camera does not acquire the data permanently but only at predefined method steps. For example, the camera acquires data at each method step the operator aspirates reagent into the pipette and/or dispenses reagent therefrom according to the workflow. Thus, the amount of data acquired may be reduced to important or essential data.

In addition, the camera is adapted to acquire the data from the vision analysis within predetermined time periods. In other words, the camera does not acquire the data permanently but only at predefined points of time. For example, the camera acquires data every 5 seconds or any other time period which may be a time period necessary for carrying out a method step. Thus, the amount of data acquired may be reduced to important or essential data.

The data include positions of the pipette and the target data include target positions of the pipette and/or positions of the reagent vessels. Thus, a detection whether the pipette and/or the reagent vessels are at the correct positions or not according to the workflow is provided.

The target positions are correlated to the plurality of method steps of the workflow.

Thus, a detection whether the pipette and/or the reagent vessels are at the correct positions or not according to one or more method steps of the workflow is provided.

The computing device may be adapted to signalize a deviation of the data from the target data. For example, the computing device is adapted to acoustically and/or visually signalize the deviation of the data from the target data. Thus, the operator may be informed of any incorrect operation according to the workflow.

The pipette may be adapted to acquire pipetting data of the pipetting process and the computing device may be adapted to compare the pipetting data to target pipetting data correlated to the plurality of method steps of the workflow. Thus, a detection whether the pipetting process is carried out by the operator correctly or not according to the workflow is provided.

The computing device may be adapted to signalize a deviation of the pipetting data from the target pipetting data. For example, the computing device is adapted to acoustically and/or visually signalize the deviation of the pipetting data from the target pipetting data. Thus, the operator may be informed of any incorrect pipetting process according to the workflow.

Pipetting data in the sense of the present invention are data acquired by the pipette which include at least a volume of reagent aspirated into and/or dispensed from the pipette.

The target data are correlated to each method step of the plurality of method steps of the workflow. In other words, target data are associated with each method step such that the target data of the respective method steps are independent on one another. The camera may be adapted to acquire the data of each method step of the pipetting process carried out by the operator. Thus, every single method step is visually observed by means of the camera. The computing device may be adapted to display the plurality of method steps in a subsequent order. In other words, the method steps are present in a predefined order according to the workflow. The computing device may be adapted to display a following method step of the subsequent order if the data of a previous method step which is previous to the following method step corresponds to the correlated target data. In other words, the display displays a next method step according to the workflow only if the previous method step has been carried out correctly. Thus, in case an incorrect method step is or will be carried out by the operator, the workflow is terminated or interrupted in order to prevent a wrong progress of the workflow. Accordingly, the operator is safely guided through the workflow.

The data acquired by the camera comprise images of at least the plurality of compartments. Thus, the computing device may compare these images with the target data which may be images expected to be present at a predetermined method step. In other words, the computing may detect a match or mismatch of images correlated to the method steps of workflow.

The target data may be stored on the computing device and/or a storage medium external to the computing device such as an USB stick or the like. Thus, different target data correlated to different workflows may be stored on the computing device or input therein. According to the present invention, a method for operating a laboratory analyzer for manually handling a plurality of reagents is disclosed. The method comprises displaying a workflow of a pipetting process comprising a plurality of method steps to an operator, acquiring data from a vision analysis of at least a plurality of reagent vessels during manually carrying out a pipetting process by an operator according to the workflow, and comparing the data to target data correlated to the plurality of method steps of the workflow. Thus, the method allows to detect whether the pipetting process is or will be carried out by the operator according to the workflow or not.

The data from the vision analysis are acquired at predetermined method steps according to the workflow. Thus, the amount of data acquired may be reduced to important or essential data.

In addition, the data from the vision analysis are acquired within predetermined time periods. Thus, the amount of data acquired may be reduced to important or essential data.

The data include positions of a pipette of the laboratory analyzer and the target data include target positions of the pipette and/or positions of the reagent vessels. Thus, a detection whether the pipette and/or the reagent vessels are at the correct positions or not according to the workflow is provided.

The target positions are correlated to the plurality of method steps of the workflow. Thus, a detection whether the pipette and/or the reagent vessels are at the correct positions or not according to one or more method steps of the workflow is provided.

A deviation of the data from the target data may be signalized. Particularly, the deviation of the data from the target data may be acoustically and/or visually signalized. Thus, an operator may be informed of any incorrect operation according to the workflow.

Further, pipetting data of the pipetting process may be acquired and the pipetting data are compared to target pipetting data correlated to the plurality of method steps of the workflow. Thus, a detection whether the pipetting process is carried out by the operator correctly or not according to the workflow is provided.

A deviation of the pipetting data from the target pipetting data may be signalized. Particularly, the deviation of the pipetting data from the target pipetting data my be acoustically and/or visually signalized. Thus, an operator may be informed of any incorrect pipetting process according to the workflow.

The pipetting data may include at least a volume of reagent aspirated into and/or dispensed from the pipette.

The target data are correlated to each method step of the plurality of method steps of the workflow. The data of each method step of the pipetting process carried out by the operator may be acquired. The plurality of method steps may be displayed in a subsequent order, and a following method step of the subsequent order may be displayed if the data of a previous method step which is previous to the following method step corresponds to the correlated target data. Thus, in case an incorrect method step is or will be carried out by the operator, the workflow is terminated or interrupted in order to prevent a wrong progress of the workflow. Accordingly, the operator is safely guided through the workflow.

The acquired data comprise images of at least the plurality of reagent vessels. Thus, these images may be compared with the target data which may be images expected to be present at a predetermined method step. In other words, a match or mismatch of images correlated to the method steps of workflow may be detected.

The target data may be stored on a computing device of the laboratory analyzer and/or a storage medium. Thus, different target data correlated to different workflows may be stored on the computing device or input therein.

The present disclosure further discloses and proposes a computer program including computer-executable instructions for performing the method according to the present invention in one or more of the embodiments enclosed herein when the program is executed on a computer or computer network. Specifically, the computer program may be stored on a computer-readable data carrier. Thus, specifically, one, more than one or even all of the method steps as indicated above may be performed by using a computer or a computer network, preferably by using a computer program.

The present disclosure further discloses and proposes a computer program product having program code means, in order to perform the method according to the present invention in one or more of the embodiments enclosed herein when the program is executed on a computer or computer network. Specifically, the program code means may be stored on a computer-readable data carrier.

Further, the present disclosure discloses and proposes a data carrier having a data structure stored thereon, which, after loading into a computer or computer network, such as into a working memory or main memory of the computer or computer network, may execute the method according to one or more of the embodiments disclosed herein.

The present disclosure further proposes and discloses a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

Finally, the present disclosure proposes and discloses a modulated data signal which contains instructions readable by a computer system or computer network, for performing the method according to one or more of the embodiments disclosed herein.

Preferably, referring to the computer-implemented aspects of the present disclosure, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, the present disclosure further discloses:
- A computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

### Short description of the figures

Further Details of the invention may be derived from the following disclosure of preferred embodiments. The features of the embodiments may be realized in an isolated way or in any combination. The invention is not restricted to the embodiments. The embodiments are schematically depicted in the figure. Identical reference numbers in the figure refer to identical elements or functionally identical elements or elements corresponding to each other with regard to their functions.

In the figure:

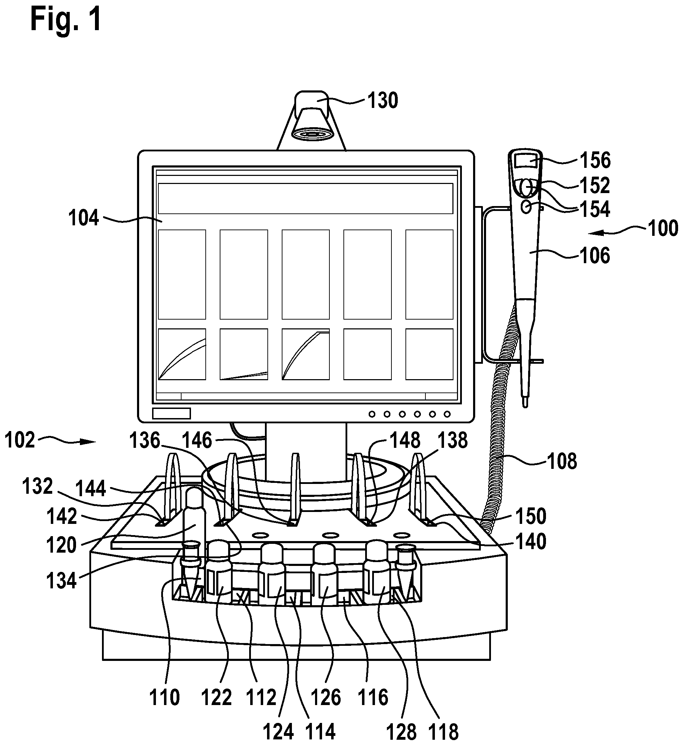

Figure 1 shows a perspective view of a laboratory analyzer for manually handling a plurality of reagents.

### Exemplary embodiments

Figure 1 shows a perspective view of a laboratory analyzer 100 for manually handling a plurality of reagents. The laboratory analyzer 100 may be a benchtop laboratory instrument like the platelet function analyzer. The laboratory analyzer 100 comprises a computing device 102. The computing device 102 comprises a display 104 for displaying a workflow of a pipetting process comprising a plurality of method steps to an operator. The computing device 104 may be a commercially available PC and the display 104 may be the monitor of the PC.

The laboratory analyzer 100 further comprises a pipette 106 for pipetting reagents. The pipette 106 is connected to the computing device 102. More particularly, the pipette 106 is an electronic pipette and is electronically connected to the computing device 102. In the embodiment shown in Figure 1, the pipette 106 is connected to the computing device 102 by means of a cable 108. For example, both of the pipette 106 and the computing device 102 may comprise an USB interface and the cable 108 may be an USB cable which is connected to the pipette 106 and the computing device 102. It is explicitly stated that the pipette 106 may be connected to the computing device by means of any electronic connection known to the person skilled in the art. For example, alternatively, the pipette 106 may be connected to the computing device 102 by means of a wireless connection such as radio communication, Bluetooth or the like.

The laboratory analyzer 100 further comprises a plurality of compartments 110, 112, 114, 116, 118 for receiving a plurality of reagents vessels 120, 122, 124, 126, 128 for storing reagents to be pipetted by means of the pipette 106. In the embodiment shown in Figure 1, the laboratory analyzer 100 comprises five compartments 110, 112, 114, 116, 118 for receiving five reagents vessels 120, 122, 124, 126, 128. Needless to say, the number of compartments is not limited to five but may be more or less. Particularly, the laboratory analyzer 100 comprises at least two compartments. The compartments 110, 112, 114, 116, 118 are arranged in a row from the left to the right with respect to the illustration of Figure 1. As such, the compartments 110, 112, 114, 116, 118 may be indicated as a first compartment 110, a second compartment 112, a third compartment 114, a fourth compartment 116 and a fifth compartment 118 if seen from the left to the right. The expressions first, second, third, fourth and fifth are not intended to indicate a certain order of importance but are merely intended to facilitate a differentiation of the respective compartments 110, 112, 114, 116, 118. Analogously, the reagents vessels 120, 122, 124, 126, 128 may be indicated as a first reagent vessel 120, a second reagent vessel 122, a third reagent vessel 124, a fourth reagent vessel 126 and a fifth reagent vessel 128 if seen from the left to the right. The expressions first, second, third, fourth and fifth are not intended to indicate a certain order of importance but are merely intended to facilitate a differentiation of the respective reagents vessels 120, 122, 124, 126, 128.

The laboratory analyzer 100 further comprises a camera 130. The camera 130 connected to the computing device 102. The camera 130 may be arranged at a top of the display 104. The camera 130 is adapted to acquire data from a vision analysis of at least the plurality of compartments 110, 112, 114, 116, 118 during manually carrying out a pipetting process by the operator according to the workflow. The computing device 102 is adapted to compare the data to target data correlated to the plurality of method steps of the workflow. The target data are stored on the computing device 102 and/or a storage medium such as an USB stick, a disc or the like.

The laboratory analyzer 100 further comprises a plurality of cuvette compartments 132, 134, 136, 138, 140 for receiving a plurality of cuvettes 142, 144, 146, 148, 150. In the embodiment shown in Figure 1, the laboratory analyzer 100 comprises five cuvette compartments 132, 134, 136, 138, 140 for receiving five cuvettes 142, 144, 146, 148, 150. Needless to say, the number of cuvette compartments is not limited to five but may be more or less. The cuvette compartments 132, 134, 136, 138, 140 are arranged in a row from the left to the right with respect to the illustration of Figure 1. As such, the cuvette compartments 132, 134, 136, 138, 140 may be indicated as a first cuvette compartment 132, a second cuvette compartment 134, a third cuvette compartment 136, a fourth cuvette compartment 138 and a fifth cuvette compartment 140 if seen from the left to the right. The expressions first, second, third, fourth and fifth are not intended to indicate a certain order of importance but are merely intended to facilitate a differentiation of the respective cuvette compartments 132, 134, 136, 138, 140. Analogously, the cuvettes 142, 144, 146, 148, 150 may be indicated as a first cuvette 142, a second cuvette 144, a third cuvette 146, a fourth cuvette 148 and a fifth cuvette 150 if seen from the left to the right. The expressions first, second, third, fourth and fifth are not intended to indicate a certain order of importance but are merely intended to facilitate a differentiation of the respective cuvettes 142, 144, 146, 148, 150. The cuvettes 142, 144, 146, 148, 150 are adapted to receive a mixture of reagents pipetted from at least some of the reagent vessels 120, 122, 124, 126, 128 therein. The mixture of reagents in the cuvettes 142, 144, 146, 148, 150 is analyzed by the laboratory analyzer 100.

The camera 130 is adapted to acquire the data from the vision analysis at predetermined method steps according to the workflow. Particularly, the camera 130 is adapted to acquire the data from the vision analysis within predetermined time periods such as every 5 seconds. The data acquired by the camera 130 comprise images of at least the plurality of compartments 110, 112, 114, 116, 118. On other words, the camera 130 is adapted to take images of at least the plurality of compartments 110, 112, 114, 116, 118. The data include positions of the pipette 106. In other words, the data are correlated to positions of the pipette 106 at the laboratory analyzer 100. For example, the data include information where the pipette 106 is positioned at the reagent vessels 120, 122, 124, 126, 128 or the compartments 110, 112, 114, 116, 118 and/or the cuvette compartments 142, 144, 146, 148, 150. The target data include target positions of the pipette 106 and/or positions of the reagent vessels 120, 122, 124, 126, 128. The target positions are correlated to the plurality of method steps of the workflow. In other words, the target data include positions where the pipette 106 and/or the reagent vessels 120, 122, 124, 126, 128 are expected to be located at a predetermined method step as will be explained in further detail below. The computing device 102 is adapted to signalize a deviation of the data from the target data. Particularly, the computing device 102 is adapted to acoustically and/or visually signalize the deviation of the data from the target data. For example, if the computing device 102 determines a deviation of the data from the target data, an alert sounds by a siren and/or is displayed on the display 104.

The pipette 106 is adapted to acquire pipetting data of the pipetting process. The computing device 102 is adapted to compare the pipetting data to target pipetting data correlated to the plurality of method steps of the workflow. The computing device 102 is adapted to signalize a deviation of the pipetting data from the target pipetting data. Particularly, the computing device 102 is adapted to acoustically and/or visually signalize the deviation of the pipetting data from the target pipetting data. For example, if the computing device 102 determines a deviation of the pipetting data from the target pipetting data, an alert sounds by a siren and/or is displayed on the display 104. The pipetting data include at least a volume of reagent aspirated into and/or dispensed from the pipette 106. For this reason, the pipette 106 may comprise an electronics card 152 comprising knobs 154 and a pipette display 156. The electronics card 152 is arranged within the pipette 106 and is adapted to detect the volume of reagent aspirated into and/or dispensed from the pipette 106.

Optionally, the target data are correlated to each single method step of the plurality of method steps of the workflow. The camera 130 is adapted to acquire the data of each single method step of the pipetting process carried out by the operator. The computing device 102 is adapted to display the plurality of method steps in a subsequent order. The computing device 102 is adapted to display a following method step of the subsequent order if the data of a previous method step which is previous to the following method step corresponds to the correlated target data.

Hereinafter, a method for operating the laboratory analyzer 100 will be described. An operator activates the computing device 102. Further, the operator activates the pipette 106. Then, the operator selects a predetermined pipetting process to be carried out. The computing device 102 displays a workflow of the selected pipetting process comprising a plurality of method steps to the operator on the display 104. The method steps include information of the reagent vessels 120, 122, 124, 126, 128. More particularly, the method steps include information which one of the reagent vessels 120, 122, 124, 126, 128 has to be disposed in which one of the compartments 110, 112, 114, 116, 118. For example, information is displayed on the display 104 indicating that the first reagent vessel 120 has to be disposed in the first compartment 110, that the second reagent vessel 122 has to be disposed in the second compartment 112 etc., wherein the reagent vessels 120, 122, 124, 126, 128 bear information of the reagents stored therein. For example, the reagent vessels 120, 122, 124, 126, 128 are marked such as by means of different colors so as to facilitate identification of the respective reagents stored therein.

Then the computing device 102 activates the camera 130 in order to acquire data from a vision analysis of at least a plurality of reagent vessels 120, 122, 124, 126, 128 during manually carrying out a pipetting process by the operator according to the workflow. The acquired data comprise images of at least the plurality of reagent vessels 120, 122, 124, 126, 128. The data from the vision analysis are acquired at predetermined method steps according to the workflow. As such, a first method step of the pipetting process according to the workflow may be seen in the arrangement of the reagent vessels 120, 122, 124, 126, 128 at the compartments 110, 112, 114, 116, 118. Alternatively or in addition, the data from the vision analysis are acquired within predetermined time periods such as every 5 seconds.

The display 104 displays further method steps of the pipetting process according to the workflow. For example, the display 104 displays the instruction to use the pipette 106 in order to aspirate a predetermined amount of the reagent stored within the first reagent vessel 120 and to dispense the predetermined amount into the fifth reagent vessel 128. As such a second method step of the pipetting process according to the workflow may be seen in a first aspirating process and a third method step of the pipetting process according to the workflow may be seen in a first dispensing process. During these method steps of the manual pipetting process, the camera 130 also acquires further data from the vision analysis of at least a plurality of reagent vessels 120, 122, 124, 126, 128. The data include positions of the pipette 106. In other words, the camera 130 takes images of the reagents vessels 120, 122, 124, 126, 128 and the pipette 106 located at the reagents vessels 120, 122, 124, 126, 128 or in the vicinity thereof.

The computing device 102 compares the data to target data correlated to the plurality of method steps of the workflow. The target data are stored on the computing device 102. Alternatively or in addition, the target data are stored on a storage medium such as an USB stick, a disc or the like. The target data include target positions of the pipette 106 and/or positions of the reagent vessels 120, 122, 124, 126, 128. The target positions are correlated to the plurality of method steps of the workflow. In other words, the target data include information where the pipette 106 and/or positions of the reagent vessels 120, 122, 124, 126, 128 are expected to be located at a predetermined method step according to the workflow. For example, the target data include information that the first reagent vessel 120 is expected to be disposed in the first compartment 110, that the second reagent vessel 122 is expected to be in the second compartment 112 etc. in the above mentioned first method step. Further, regarding this given example, the target data include information that the pipette 106 and the pipette tip thereof, respectively, is expected to be located at the first reagent vessel 120 in the above second method step and that the pipette 106 is expected to be located at the fifth reagent vessel 128 in the above third method step. The computing device 102 compares the images taken by the camera 130 with this information of the target data.

In case the computing device 102 detects a mismatch of the data and the target data, the computing device 102 signalizes this deviation of the data from the target data to the operator. For example, if the operator has disposed the reagent vessels 120, 122, 124, 126, 128 at incorrect positions or compartments 110, 112, 114, 116, 118 or has aspirated a wrong reagent or dispensed the reagent into the wrong one of reagent vessels 120, 122, 124, 126, 128 or the pipette 106 is located at a wrong one of reagent vessels 120, 122, 124, 126, 128 according to the associated or correlated method step, the computing devices 102 detects a deviation of the data from the target data. The computing device 102 may acoustically and/or visually signalize the deviation of the data from the target data. For example, the computing device 102 may activate an alert that is heard by the operator and/or display an alert on the display 104 that is seen by the operator. Needless to say, the workflow may comprise further method steps not described in detail. For example, the workflow may comprise aspirating and dispensing further reagents into the fifth reagent vessel 128 or another one of the reagent vessels 120, 122, 124, 126, 128 or into a predetermined one of the cuvettes 142, 144, 146, 148, 150 depending on the respective analyze to be carried out.

Further, the pipette 106 may acquire pipetting data of the pipetting process. The pipetting data include at least a volume of reagent aspirated into and/or dispensed from the pipette 106. Regarding the above example, the pipette 106 detects an amount of 20 ml aspirated from the first reagent vessel 120 and an amount of 20 ml dispensed into the fifth reagent vessel 128. The computing device 102 compares the pipetting data to target pipetting data correlated to the plurality of method steps of the workflow. In other words, the computing device 102 compares whether the amount aspirated into the pipette 106 and dispensed from the pipette 106 corresponds to a target amount to be aspirated and to a target amount to be dispensed in the above second and third method steps. In case the computing device 102 detects a deviation of the pipetting data from the target pipetting data, this deviation is signalized to the operator. The deviation of the pipetting data from the target pipetting data may be acoustically and/or visually signalized to the operator. For example, if the computing device 102 detects that the amount aspirated into the pipette 106 and dispensed from the pipette 106 does not correspond to the target amount to be aspirated and to the target amount to be dispensed in the above second and third method steps, the computing device 102 may activate an alert that is heard by the operator and/or display an alert on the display 104 that is seen by the operator.

Optionally, the target data are correlated to each method step of the plurality of method steps of the workflow and the data of each method step of the pipetting process carried out by the operator are acquired. The plurality of method steps are displayed on the display 104 in a predetermined subsequent order and a following method step of the subsequent order is displayed only if the data of a previous method step which is previous to the following method step corresponds to the correlated target data of the previous method step. In other words, the computing device 102 only activates the display 104 to display the next method step to be carried out if the previous method step carried out by the operator fully corresponds to an expected method step to be carried out according to the workflow.

### List of reference numbers

- 100: laboratory analyzer
- 102: computing device
- 104: display
- 106: pipette
- 108: cable
- 110: first compartment
- 112: second compartment
- 114: third compartment
- 116: fourth compartment
- 118: fifth compartment
- 120: first reagent vessel
- 122: second reagent vessel
- 124: third reagent vessel
- 126: fourth reagent vessel
- 128: fifth reagent vessel
- 130: camera
- 132: first cuvette compartment
- 134: second cuvette compartment
- 136: third cuvette compartment
- 138: fourth cuvette compartment
- 140: fifth cuvette compartment
- 142: first cuvette
- 144: second cuvette
- 146: third cuvette
- 148: fourth cuvette
- 150: fifth cuvette
- 152: electronics card
- 154: knob
- 156: pipette display

## Claims

1. A laboratory analyzer (100) for manually handling a plurality of reagents, comprising
a computing device (102) comprising a display (104) for displaying a workflow of a pipetting process comprising a plurality of method steps to an operator, wherein the workflow is a predetermined pattern of instructions to be carried out by an operator of the laboratory analyzer (100),
a pipette (106) for manually pipetting reagents by an operator, the pipette being connected to the computing device (102), wherein the pipette (106) is an electronic pipette, wherein the pipette (106) is electronically connected to the computing device (102),
a plurality of compartments (110, 112, 114, 116, 118) for receiving a plurality of reagents vessels (120, 122, 124, 126, 128) including reagents to be pipetted by means of the pipette (106),
a camera (130) connected to the computing device (102), wherein the camera (130) is adapted to acquire data from a vision analysis of at least the plurality of compartments (110, 112, 114, 116, 118) during manually carrying out a pipetting process by the operator according to the workflow, wherein the data acquired by the camera (130) comprises images of at least the plurality of the compartments (110, 112, 114, 116, 118) and the pipette (106), wherein the data include positions of the pipette (106),
wherein the vision analysis is an analysis method using the camera for optical detection of predetermined regions of the laboratory analyzer (100), wherein the results of the detection are represented by means of data, wherein the computing device (102) is adapted to compare the data to target data correlated to the plurality of method steps of the workflow, wherein the target data include target positions of the pipette (106), wherein the target positions are correlated to the plurality of method steps of the workflow, wherein the camera (130) is adapted to acquire the data from the vision analysis at predetermined method steps according to the workflow and within predetermined time periods.

2. The laboratory analyzer (100) according to the preceding claim, wherein the target data further include positions of the reagent vessels (120, 122, 124, 126, 128).

3. The laboratory analyzer (100) according to any preceding claim, wherein the computing device (102) is adapted to signalize a deviation of the data from the target data, particularly to acoustically and/or visually signalize the deviation of the data from the target data.

4. The laboratory analyzer (100) according to any preceding claim, wherein the pipette (106) is adapted to acquire pipetting data of the pipetting process, particularly pipetting data including at least a volume of reagent aspirated into and/or dispensed from the pipette (106), wherein the computing device (102) is adapted to compare the pipetting data to target pipetting data correlated to the plurality of method steps of the workflow.

5. The laboratory analyzer (100) according to the preceding claim, wherein the computing device (102) is adapted to signalize a deviation of the pipetting data from the target pipetting data, particularly, to acoustically and/or visually signalize the deviation of the pipetting data from the target pipetting data.

6. The laboratory analyzer (100) according to any preceding claim, wherein the target data are correlated to each method step of the plurality of method steps of the workflow, wherein the camera (130) is adapted to acquire the data of each method step of the pipetting process carried out by the operator, wherein the computing device (102) is adapted to display the plurality of method steps in a subsequent order, and the computing device (102) is adapted to display a following method step of the subsequent order if the data of a previous method step which is previous to the following method step corresponds to the correlated target data.

7. The laboratory analyzer (100) according to any preceding claim, wherein the data acquired by the camera (130) comprise images of at least the plurality of compartments (110, 112, 114, 116, 118).

8. A method for operating a laboratory analyzer (100) according to any preceding claim, comprising
displaying a workflow of a pipetting process comprising a plurality of method steps to an operator, wherein the workflow is a predetermined pattern of instructions to be carried out by an operator of the laboratory analyzer (100),
acquiring data from a vision analysis of at least a plurality of reagent vessels (120, 122, 124, 126, 128) during manually carrying out a pipetting process by an operator according to the workflow, wherein the data acquired by the camera (130) comprises images of at least the plurality of the compartments (110, 112, 114, 116, 118) and a pipette (106) of the laboratory analyzer (100), wherein the data include positions of the pipette (106), wherein the vision analysis is an analysis method using the camera for optical detection of predetermined regions of the laboratory analyzer (100), wherein the results of the detection are represented by means of data, and comparing the data to target data correlated to the plurality of method steps of the workflow, wherein the target data include target positions of the pipette (106), wherein the target positions are correlated to the plurality of method steps of the workflow, wherein the data from the vision analysis are acquired at predetermined method steps according to the workflow and within predetermined time periods.

9. The method according to claim 8, wherein the target data further include positions of the reagent vessels (120, 122, 124, 126, 128).

10. The method according to any one of claims 8 to 9, further comprising signalizing, particularly acoustically and/or visually signalizing, a deviation of the data from the target data.

11. The method according to any one of claims 8 to 10, wherein pipetting data of the pipetting process are acquired, particularly pipetting data including at least a volume of reagent aspirated into and/or dispensed from the pipette, wherein the pipetting data are compared to target pipetting data correlated to the plurality of method steps of the workflow.

12. The method according to the preceding claim, further comprising signalizing, particularly acoustically and/or visually signalizing, a deviation of the pipetting data from the target pipetting data.

13. The method according to any one of claims 8 to 12, wherein the target data are correlated to each method step of the plurality of method steps of the workflow, wherein the data of each method step of the pipetting process carried out by the operator are acquired, wherein the plurality of method steps are displayed in a subsequent order, and a following method step of the subsequent order is displayed if the data of a previous method step which is previous to the following method step corresponds to the correlated target data.

## Patentansprüche

1. Laboranalysator (100) zum manuellen Handhaben einer Vielzahl von Reagenzien, Folgendes umfassend:
eine Datenverarbeitungsvorrichtung (102), die eine Anzeige (104) zum Anzeigen eines Arbeitsablaufs eines Pipettierprozesses, der eine Vielzahl von Verfahrensschritten umfasst, für einen Bediener umfasst, wobei der Arbeitsablauf eine vorbestimmte Struktur von Befehlen ist, die durch einen Bediener des Laboranalysators (100) ausgeführt werden sollen,
eine Pipette (106) zum manuellen Pipettieren von Reagenzien durch einen Bediener, wobei die Pipette mit der Datenverarbeitungsvorrichtung (102) verbunden ist, wobei die Pipette (106) eine elektronische Pipette ist, wobei die Pipette (106) elektronisch mit der Datenverarbeitungsvorrichtung (102) verbunden ist,
eine Vielzahl von Kammern (110, 112, 114, 116, 118) zum Aufnehmen einer Vielzahl von Reagenzbehältern (120, 122, 124, 126, 128), die Reagenzien enthalten, die mittels der Pipette (106) pipettiert werden sollen,
eine Kamera (130), die mit der Datenverarbeitungsvorrichtung (102) verbunden ist, wobei die Kamera (130) eingerichtet ist, um Daten aus einer visuellen Analyse von mindestens der Vielzahl von Kammern (110, 112, 114, 116, 118) während eines manuellen Ausführens eines Pipettierprozesses durch den Bediener gemäß dem Arbeitsablauf zu erfassen, wobei die Daten, die durch die Kamera (130) erfasst werden, Bilder von mindestens der Vielzahl von Kammern (110, 112, 114, 116, 118) und der Pipette (106) umfassen, wobei die Daten Positionen der Pipette (106) umfassen,
wobei die visuelle Analyse ein Analyseverfahren ist, das die Kamera zur optischen Detektion von vorbestimmten Bereichen des Laboranalysators (100) verwendet, wobei die Ergebnisse der Detektion mittels Daten wiedergegeben werden, wobei die Datenverarbeitungsvorrichtung (102) eingerichtet ist, um die Daten mit Zieldaten zu vergleichen, die mit der Vielzahl von Verfahrensschritten des Arbeitsablaufs korreliert sind, wobei die Zieldaten Zielpositionen der Pipette (106) umfassen, wobei die Zielpositionen mit der Vielzahl von Verfahrensschritten des Arbeitsablaufs korreliert sind, wobei die Kamera (130) eingerichtet ist, um die Daten aus der visuellen Analyse bei vorbestimmten Verfahrensschritten gemäß dem Arbeitsablauf und innerhalb von vorbestimmten Zeitperioden zu erfassen.

2. Laboranalysator (100) nach dem vorhergehenden Anspruch, wobei die Zieldaten weiterhin Positionen der Reagenzbehälter (120, 122, 124, 126, 128) umfassen.

3. Laboranalysator (100) nach einem der vorhergehenden Ansprüche, wobei die Datenverarbeitungsvorrichtung (102) eingerichtet ist, um eine Abweichung der Daten von den Zieldaten zu signalisieren, insbesondere die Abweichung der Daten von den Zieldaten akustisch und/oder visuell zu signalisieren.

4. Laboranalysator (100) nach einem der vorhergehenden Ansprüche, wobei die Pipette (106) eingerichtet ist, um Pipettierdaten des Pipettierprozesses, insbesondere Pipettierdaten, die mindestens ein in die Pipette (106) angesaugtes und/oder daraus abgegebenes Reagenzvolumen umfassen, zu erfassen, wobei die Datenverarbeitungsvorrichtung (102) eingerichtet ist, um die Pipettierdaten mit Zielpipettierdaten zu vergleichen, die mit der Vielzahl von Verfahrensschritten des Arbeitsablaufs korreliert sind.

5. Laboranalysator (100) nach dem vorhergehenden Anspruch, wobei die Datenverarbeitungsvorrichtung (102) eingerichtet ist, um eine Abweichung der Pipettierdaten von den Zielpipettierdaten zu signalisieren, insbesondere die Abweichung der Pipettierdaten von den Zielpipettierdaten akustisch und/oder visuell zu signalisieren.

6. Laboranalysator (100) nach einem der vorhergehenden Ansprüche, wobei die Zieldaten mit jedem Verfahrensschritt der Vielzahl von Verfahrensschritten des Arbeitsablaufs korreliert sind, wobei die Kamera (130) eingerichtet ist, um die Daten von jedem Verfahrensschritt des Pipettierprozesses, der durch den Bediener ausgeführt wird, zu erfassen, wobei die Datenverarbeitungsvorrichtung (102) eingerichtet ist, um die Vielzahl von Verfahrensschritten in einer aufeinanderfolgenden Reihenfolge anzuzeigen, und die Datenverarbeitungsvorrichtung (102) eingerichtet ist, um einen folgenden Verfahrensschritt der aufeinanderfolgenden Reihenfolge anzuzeigen, wenn die Daten eines vorhergehenden Verfahrensschritts, der dem folgenden Verfahrensschritt vorhergehend ist, den korrelierten Zieldaten entsprechen.

7. Laboranalysator (100) nach einem der vorhergehenden Ansprüche, wobei die Daten, die durch die Kamera (130) erfasst werden, Bilder von mindestens der Vielzahl von Kammern (110, 112, 114, 116, 118) umfassen.

8. Verfahren zum Betreiben eines Laboranalysators (100) nach einem der vorhergehenden Ansprüche, Folgendes umfassend:
Anzeigen eines Arbeitsablaufs eines Pipettierprozesses, der eine Vielzahl von Verfahrensschritten umfasst, für einen Bediener, wobei der Arbeitsablauf eine vorbestimmte Struktur von Befehlen ist, die durch einen Bediener des Laboranalysators (100) ausgeführt werden sollen,
Erfassen von Daten aus einer visuellen Analyse von mindestens einer Vielzahl von Reagenzbehältern (120, 122, 124, 126, 128) während eines manuellen Ausführens eines Pipettierprozesses durch einen Bediener gemäß dem Arbeitsablauf, wobei die Daten, die durch die Kamera (130) erfasst werden, Bilder von mindestens der Vielzahl von Kammern (110, 112, 114, 116, 118) und einer Pipette (106) des Laboranalysators (100) umfassen, wobei die Daten Positionen der Pipette (106) umfassen,
wobei die visuelle Analyse ein Analyseverfahren ist, das die Kamera zur optischen Detektion von vorbestimmten Bereichen des Laboranalysators (100) verwendet, wobei die Ergebnisse der Detektion mittels Daten wiedergegeben werden, und die Daten mit Zieldaten vergleicht, die mit der Vielzahl von Verfahrensschritten des Arbeitsablaufs korreliert sind, wobei die Zieldaten Zielpositionen der Pipette (106) umfassen, wobei die Zielpositionen mit der Vielzahl von Verfahrensschritten des Arbeitsablaufs korreliert sind, wobei die Daten aus der visuellen Analyse bei vorbestimmten Verfahrensschritten gemäß dem Arbeitsablauf und innerhalb von vorbestimmten Zeitperioden erfasst werden.

9. Verfahren nach Anspruch 8, wobei die Zieldaten weiterhin Positionen der Reagenzbehälter (120, 122, 124, 126, 128) umfassen.

10. Verfahren nach einem der Ansprüche 8 bis 9, weiterhin Signalisieren, insbesondere akustisches und/oder visuelles Signalisieren, einer Abweichung der Daten von den Zieldaten umfassend.

11. Verfahren nach einem der Ansprüche 8 bis 10, wobei Pipettierdaten des Pipettierprozesses erfasst werden, insbesondere Pipettierdaten, die mindestens ein in die Pipette angesaugtes und/oder daraus abgegebenes Reagenzvolumen umfassen, wobei die Pipettierdaten mit Zielpipettierdaten verglichen werden, die mit der Vielzahl von Verfahrensschritten des Arbeitsablaufs korreliert sind.

12. Verfahren nach dem vorhergehenden Anspruch, weiterhin Signalisieren, insbesondere akustisches und/oder visuelles Signalisieren, einer Abweichung der Pipettierdaten von den Zielpipettierdaten umfassend.

13. Verfahren nach einem der Ansprüche 8 bis 12, wobei die Zieldaten mit jedem Verfahrensschritt der Vielzahl von Verfahrensschritten des Arbeitsablaufs korreliert sind, wobei die Daten von jedem Verfahrensschritt des Pipettierprozesses, der durch den Bediener ausgeführt wird, erfasst werden, wobei die mehreren Verfahrensschritte in einer aufeinanderfolgenden Reihenfolge angezeigt werden und ein folgender Verfahrensschritt der aufeinanderfolgenden Reihenfolge angezeigt wird, wenn die Daten eines vorhergehenden Verfahrensschritts, der dem folgenden Verfahrensschritt vorhergehend ist, den korrelierten Zieldaten entsprechen.

## Revendications

1. Analyseur de laboratoire (100) destiné à manipuler manuellement une pluralité de réactifs, comprenant
un dispositif informatique (102) comprenant un écran (104) pour afficher pour un opérateur un flux de travaux d'une opération de pipetage comprenant une pluralité d'étapes de procédé, le flux de travaux étant une séquence prédéterminée d'instructions devant être réalisées par un opérateur de l'analyseur de laboratoire (100),
une pipette (106) pour le pipetage manuel de réactifs par un opérateur, la pipette étant reliée au dispositif informatique (102), la pipette (106) étant une pipette électronique, la pipette (106) étant reliée électroniquement au dispositif informatique (102),
une pluralité de compartiments (110, 112, 114, 116, 118) pour recevoir une pluralité de récipients de réactifs (120, 122, 124, 126, 128) comportant des réactifs devant être pipettés au moyen de la pipette (106),
une caméra (130) reliée au dispositif informatique (102), la caméra (130) étant adaptée pour acquérir des données issues d'une analyse visuelle au moins de la pluralité de compartiments (110, 112, 114, 116, 118) pendant la réalisation manuelle d'une opération de pipetage par l'opérateur en fonction du flux de travaux, les données acquises par la caméra (130) comprenant des images au moins de la pluralité de compartiments (110, 112, 114, 116, 118) et de la pipette (106), les données comportant des positions de la pipette (106),
dans lequel l'analyse visuelle est un procédé d'analyse utilisant la caméra pour la détection optique de régions prédéterminées de l'analyseur de laboratoire (100), dans lequel les résultats de la détection sont représentés au moyen de données, dans lequel le dispositif informatique (102) est adapté pour comparer les données à des données cibles corrélées à la pluralité d'étapes de procédé du flux de travaux, dans lequel les données cibles comportent des positions cibles de la pipette (106), dans lequel les positions cibles sont corrélées à la pluralité d'étapes de procédé du flux de travaux, dans lequel la caméra (130) est adaptée pour acquérir les données issues de l'analyse visuelle à des étapes de procédé prédéterminées en fonction du flux de travaux et dans des laps de temps prédéterminés.

2. Analyseur de laboratoire (100) selon la revendication précédente, dans lequel les données cibles comportent en outre des positions des récipients de réactifs (120, 122, 124, 126, 128) .

3. Analyseur de laboratoire (100) selon une quelconque revendication précédente, dans lequel le dispositif informatique (102) est adapté pour signaler un écart des données par rapport aux données cibles, en particulier pour signaler acoustiquement et/ou visuellement l'écart des données par rapport aux données cibles.

4. Analyseur de laboratoire (100) selon une quelconque revendication précédente, dans lequel la pipette (106) est adaptée pour acquérir des données de pipetage de l'opération de pipetage, en particulier des données de pipetage comportant au moins un volume de réactif aspiré à l'intérieur de et/ou distribué depuis la pipette (106), dans lequel le dispositif informatique (102) est adapté pour comparer les données de pipetage à des données de pipetage cibles corrélées à la pluralité d'étapes de procédé du flux de travaux.

5. Analyseur de laboratoire (100) selon une quelconque revendication précédente, dans lequel le dispositif informatique (102) est adapté pour signaler un écart des données de pipetage par rapport aux données de pipetage cibles, en particulier pour signaler acoustiquement et/ou visuellement l'écart des données de pipetage par rapport aux données de pipetage cibles.

6. Analyseur de laboratoire (100) selon une quelconque revendication précédente, dans lequel les données cibles sont corrélées à chaque étape de procédé de la pluralité d'étapes de procédé du flux de travaux, dans lequel la caméra (130) est adaptée pour acquérir les données de chaque étape de procédé de l'opération de pipetage réalisée par l'opérateur, dans lequel le dispositif informatique (102) est adapté pour afficher la pluralité d'étapes de procédé dans un ordre successif, et le dispositif informatique (102) est adapté pour afficher une étape de procédé suivante de l'ordre successif si les données d'une étape de procédé précédente qui est antérieure à l'étape de procédé suivante correspondent aux données cibles corrélées.

7. Analyseur de laboratoire (100) selon une quelconque revendication précédente, dans lequel les données acquises par la caméra (130) comprennent des images au moins de la pluralité de compartiments (110, 112, 114, 116, 118).

8. Procédé de fonctionnement d'un analyseur de laboratoire (100) selon une quelconque revendication précédente, comprenant
l'affichage pour un opérateur d'un flux de travaux d'une opération de pipetage comprenant une pluralité d'étapes de procédé, le flux de travaux étant une séquence prédéterminée d'instructions devant être réalisées par un opérateur de l'analyseur de laboratoire (100),
l'acquisition de données issues d'une analyse visuelle au moins d'une pluralité de récipients de réactifs (120, 122, 124, 126, 128) pendant la réalisation manuelle d'une opération de pipetage par un opérateur en fonction du flux de travaux, les données acquises par la caméra (130) comprenant des images au moins de la pluralité de compartiments (110, 112, 114, 116, 118) et d'une pipette (106) de l'analyseur de laboratoire (100), les données comportant des positions de la pipette (106),
l'analyse visuelle étant un procédé d'analyse utilisant la caméra pour la détection optique de régions prédéterminées de l'analyseur de laboratoire (100), les résultats de la détection étant représentés au moyen de données, et
la comparaison des données à des données cibles corrélées à la pluralité d'étapes de procédé du flux de travaux,
les données cibles comportant des positions cibles de la pipette (106), les positions cibles étant corrélées à la pluralité d'étapes de procédé du flux de travaux, les données issues de l'analyse visuelle étant acquises à des étapes de procédé prédéterminées en fonction du flux de travaux et dans des laps de temps prédéterminés.

9. Procédé selon la revendication 8, dans lequel les données cibles comportent en outre des positions des récipients de réactifs (120, 122, 124, 126, 128).

10. Procédé selon l'une quelconque des revendications 8 à 9, comprenant en outre le signalement, en particulier le signalement acoustique et/ou visuel, d'un écart des données par rapport aux données cibles.

11. Procédé selon l'une quelconque des revendications 8 à 10, dans lequel des données de pipetage de l'opération de pipetage sont acquises, en particulier des données de pipetage comportant au moins un volume de réactif aspiré à l'intérieur de et/ou distribué depuis la pipette, dans lequel les données de pipetage sont comparées à des données de pipetage cibles corrélées à la pluralité d'étapes de procédé du flux de travaux.

12. Procédé selon la revendication précédente, comprenant en outre le signalement, en particulier le signalement acoustique et/ou visuel, d'un écart des données de pipetage par rapport aux données de pipetage cibles.

13. Procédé selon l'une quelconque des revendications 8 à 12, dans lequel les données cibles sont corrélées à chaque étape de procédé de la pluralité d'étapes de procédé du flux de travaux, dans lequel les données de chaque étape de procédé de l'opération de pipetage réalisée par l'opérateur sont acquises, dans lequel la pluralité d'étapes de procédé sont affichées dans un ordre successif, et une étape de procédé suivante de l'ordre successif est affichée si les données d'une étape de procédé précédente qui est antérieure à l'étape de procédé suivante correspondent aux données cible corrélées.
